# EUROPÄISCHE PATENTSCHRIFT

(11) **EP 3 513 253 B1**
(45) Veröffentlichungstag und Bekanntmachung des Hinweises auf die Patenterteilung: **13.03.2024**
(21) Anmeldenummer: 17754658.7
(22) Anmeldetag: 08.08.2017
(51) Int. Cl.: G03H 1/22, G02B 27/01, G02B 27/42, G03H 1/26, B60K 35/00, B60Q 1/00, B60Q 1/26, F21S 43/251, F21S 43/20, B60Q 1/50, B60Q 1/30

(54) **VERFAHREN UND VORRICHTUNG ZUR ERZEUGUNG VON BILDEFFEKTEN IM INNENRAUM ODER AUSSERHALB EINES FAHRZEUGS**
METHOD AND APPARATUS FOR PRODUCING IMAGE EFFECTS IN THE INTERIOR OR OUTSIDE OF A VEHICLE
PROCEDE ET DISPOSITIF DE PRODUCTION D'EFFETS D'IMAGE DANS L'HABITACLE OU A L'EXTERIEUR D'UN VEHICULE

(30) Priorität: 13.09.2016 DE 102016217398
(43) Veröffentlichungstag der Anmeldung: 24.07.2019
(73) Patentinhaber: Volkswagen Aktiengesellschaft, 38440 Wolfsburg (DE)
(72) Erfinder: STUDENY, Christian, 38104 Braunschweig (DE); PFULLMANN, Nils, 30419 Hannover (DE)
(86) Internationale Anmeldenummer: PCT/EP2017/070013
(87) Internationale Veröffentlichungsnummer: WO 2018/050362

(56) Entgegenhaltungen:
- JP-A- H03 121 942
- US-A- 4 790 613
- US-A- 4 892 369
- US-A- 5 106 174
- US-A- 5 729 367
- US-A1- 2012 262 288

## Beschreibung

Die Erfindung betrifft ein Verfahren zur Erzeugung von Bildeffekten im Innenraum und/oder außerhalb eines Fahrzeugs gemäß dem Oberbegriff des Patentanspruchs 1, eine Beleuchtungsanordnung für ein Fahrzeug gemäß dem Oberbegriff des Patentanspruchs 4, sowie ein Kraftfahrzeug gemäß des Oberbegriffs des Patentanspruchs 9.

Ein allgemeiner Trend in der Fahrzeugentwicklung besteht darin, eine immer größere Zahl von Funktionen auf gleichbleibenden oder sogar geringer werdenden Bauraum zu integrieren. Wenn von der Integration von Funktionen die Rede ist, so betrifft dies insbesondere funktionsbehaftete technische Elemente des Fahrzeugs und deren Integration in dasselbige. Ein Beispiel hierfür ist die Integration von Lichtfunktionen in Fahrzeugen. Dort ist es beispielsweise bekannt, Hologramme und diffraktive optische Elemente zur Erzeugung von komplexen Bildeffekten einzusetzen.

Die US 2004/0113053 A1 beschreibt eine Sensorvorrichtung zur Kontrolle von Beleuchtungsvorrichtungen eines Kraftfahrzeugs. Dabei wird ein diffraktives optisches Element, welches als Hologramm ausgebildet ist, an einer Fensterscheibe des Kraftfahrzeugs befestigt. Weiterhin beschreibt die DE 20 2014 003 241 U1 eine holografische Anzeigevorrichtung. Diese umfasst ein Gehäuse mit einer transparenten Abdeckung und einer Hologrammfolie, die innerhalb des Gehäuses angeordnet ist. Unterhalb der Hologrammfolie ist ein diffraktives optisches Element angeordnet. Weiterhin unterhalb des diffraktiven optischen Elements ist eine Lichtquelle angeordnet.

In der US 4,916,593 A wird eine Bremslichtanordnung mit einem Volumenhologramm offenbart.

Das Volumenhologramm ist dabei an einer Innenseite eines Fensters eines Kraftfahrzeugs angeordnet.

Die DE 10 2011 012 520 A1 offenbart weiterhin eine dritte Bremsleuchte für ein Kraftfahrzeug. Diese umfasst eine Lichtquelle, ein holografisch-optisches Bauelement und eine Lichtquelle. Das holografisch-optische Bauelement ist an einer Heckscheibe des Kraftfahrzeugs angeordnet.

Aus der US 5 729 367 A ist ein Display mit einer Hologramm-Struktur bekannt, mit der mehrere Bilder erzeugbar sind.

Aus der US 2012/262288 A1 ist ein Seitenspiegel für ein Fahrzeug bekannt, mit dem zusätzlich leuchtende Symbole anzeigbar sind.

Die US 4 790 613 A beschreibt ferner eine Anzeigevorrichtung, um Hologramme in einer Windschutzscheibe zu erzeugen.

In der US 4 892 369 A wird eine holografische Rückscheibe für ein Fahrzeug beschrieben.

Schließlich offenbart die DE 10 2014 210 213 A1 ein Verfahren zum Steuern einer Lichtemission einer Heckleuchte eines Fahrzeugs. Die Heckleuchte umfasst dabei optische Komponenten mit unterschiedlichen Teilabstrahlflächen. Mit den Teilabstrahlflächen sind unterschiedliche Lichtfunktionen erzeugbar. Die Realisierung der Lichtfunktionen erfolgt durch simultane und/oder versetzte Aktivierung der Teilabstrahlflächen. Die Schrift beschreibt weiterhin eine entsprechende Vorrichtung zur Steuerung der Lichtemission.

JP 03121942 A offenbart eine Beleuchtungseinrichtung bei der ein Referenzwellenfeld unter einem von 90° abweichenden Winkel in einen optischen Bildspeicher eingestrahlt werden kann.

Die Aufgabe der vorliegenden Erfindung besteht darin, ein Verfahren und eine Vorrichtung zur Erzeugung von Bildeffekten im Innenraum oder auch außerhalb eines Fahrzeugs anzugeben, mit denen vorhandener Bauraum effizient und flexibel nutzbar ist und gleichzeitig eine große Flexibilität hinsichtlich der erzeugbaren Bildeffekte gegeben ist.

Die Aufgabe wird durch die Gegenstände der unabhängigen Patentansprüche 1, 4 und 9 gelöst.

Bevorzugte Ausgestaltungen der Erfindung ergeben sich aus den übrigen, aus den Unteransprüchen genannten Merkmalen.

Ein erster Aspekt der Erfindung betrifft ein Verfahren zur Erzeugung von Bildeffekten im Innenraum eines Fahrzeugs und/oder außerhalb des Fahrzeugs, umfassend wenigstens die Schritte:
- Erzeugung zumindest eines ersten optischen Referenzwellenfeldes;
- Lenkung des ersten optischen Referenzwellenfeldes in Richtung wenigstens eines optischen Bildspeichers;
- Einstrahlung des ersten optischen Referenzwellenfeldes in zumindest eine Einstrahlungsfläche des optischen Bildspeichers;
- Transformation des ersten optischen Referenzwellenfeldes in wenigstens ein erstes Bildwellenfeld über wenigstens eine holografische Schicht oder diffraktive optische Schicht des optischen Bildspeichers; und
- Auskopplung des ersten Bildwellenfeldes aus der holografischen Schicht oder diffraktiven optischen Schicht an einer Auskoppelseite, wobei
- zwischen einer ersten Einstrahlungsfläche, über die zumindest das erste optische Referenzwellenfeld eingestrahlt wird und der Auskoppelseite, über die zumindest das erste Bildwellenfeld ausgekoppelt wird, ein erster Winkelversatz besteht, wobei das optische Referenzwellenfeld im optischen Bildspeicher durch Reflexion an inneren Grenzflächen geleitet wird und zumindest abschnittsweise anteilig durch eine innere Grenzfläche des optischen Bildspeichers, die der holografischen Schicht oder diffraktiven optischen Schicht zugewandt ist und die zumindest abschnittsweise anteilig lichtdurchlässig ist, hindurchtritt, wobei wenigstens ein erstes optisches Referenzwellenfeld und ein zweites optisches Referenzwellenfeld erzeugt werden und das erste optische Referenzwellenfeld an der ersten Einstrahlungsfläche und das zweite optische Referenzwellenfeld an einer zweiten Einstrahlungsfläche in den optischen Bildspeicher eingestrahlt werden und das erste und zweite optische Referenzwellenfeld simultan oder zeitversetzt in das erste Bildwellenfeld oder in unterschiedliche Bildwellenfelder transformiert werden und das erste Bildwellenfeld oder die unterschiedlichen Bildwellenfelder an der Auskoppelseite), die als gemeinsame Auskoppelseite dient, ausgekoppelt werden, und zwischen der ersten Einstrahlungsfläche und der Auskoppelseite der erste Winkelversatz besteht und wobei ein zweites optisches Referenzwellenfeld erzeugt wird, das in wenigstens eine zweite Einstrahlungsfläche eingestrahlt wird und die zweite Einstrahlungsfläche und die Auskoppelseite, die als gemeinsame Auskoppelseite dient, parallel zueinander orientiert sind.

Bei den erzeugten Bildeffekten kann es sich sowohl um reelle Bilder, als auch um virtuelle Bilder handeln. Virtuelle Bilder sind beispielsweise Hologramme. Reelle Bilder sind beispielsweise Projektionen auf eine Oberfläche. Ein Hologramm kann beispielsweise in einer Fahrzeugscheibe oder im freien Raum erzeugt werden. Beispielsweise können einem Nutzer des Fahrzeugs zusätzliche Informationen im freien Raum im Innenraum oder außerhalb des Fahrzeugs angezeigt werden sowie in Fahrzeugscheiben. Einige Beispiele sind hier das Anzeigen von Warnsymbolen, Beleuchtungsfunktionen oder auch Navigationspfeilen. Selbiges gilt für einen Beobachter des Fahrzeugs, der dieses von Außen her beobachtet. Hier kann beispielsweise ein Warnsymbol als virtuelles Bild im freien Raum zwischen dem Fahrzeug und dem Beobachter erzeugt werden. Als Beispiel für ein reelles Bild kann hier ein Lichtteppich genannt werden, der außerhalb des Fahrzeugs auf eine Fahrbahnoberfläche projiziert wird.

Eine Beschaffenheit des optischen Referenzwellenfeldes richtet sich bekannterweise nach den Anforderungen des jeweiligen zu erzeugenden Bildeffektes und des verwendeten optischen

Bildspeichers. Im allgemeinen bezeichnet der Begriff des Referenzwellenfeldes ein Wellenfeld, das geeignet ist, durch Belichtung des optischen Bildspeichers, den in dem optischen Bildspeicher gespeicherten Bildeffekt als Bildwellenfeld zu rekonstruieren, beziehungsweise zu erzeugen. Vorzugsweise handelt es sich dabei um ein kohärentes Wellenfeld. Bei Hologrammen handelt es sich dabei bekanntermaßen um jenes Wellenfeld, welches zur Aufnahme des Hologramms verwendet worden ist. Dieses Referenzwellenfeld wird bei der Aufnahme des Hologramms zunächst geteilt. Ein erster Teil erreicht das aufzunehmende Objekt und wird als Reflektion (Objektwellenfeld) von diesem reflektiert. Ein zweiter Teil wird mit dem Objektwellenfeld überlagert und gemeinsam mit diesem auf den optischen Bildspeicher gelenkt. Der optische Bildspeicher speichert diese Überlagerung. Zur Rekonstruktion des Hologramms muss der optische Bildspeicher dann mit dem Referenzwellenfeld erneut beleuchtet werden. Bei diffraktiven optischen Elementen ist der Bildeffekt bekanntermaßen in Form von räumlichen Mikrostrukturen an oder in dem diffraktiven optischen Element gespeichert. Das Referenzwellenfeld, das zur Erzeugung des Bildeffekts benötigt wird, richtet sich hier nach der Beschaffenheit dieser Mikrostrukturen, welche ausgelegt sind, ein bestimmtes Referenzwellenfeld zu beugen und hinsichtlich seines Phasenganges oder auch Amplitudenganges zu modulieren. Je nach Beschaffenheit der Mikrostrukturen ist das Referenzwellenfeld daher kohärent, vorzugsweise auch monochromatisch oder auch gleichgerichtet.

Bevorzugt wird das Referenzwellenfeld stets mit einem Laser, besonders bevorzugt mit einer Leuchtdiode erzeugt.

Die diffraktive optische Schicht oder die holografische Schicht weisen vorzugsweise Strukturen zur Transformation mehrerer Referenzwellenfelder in mehrere Bildwellenfelder auf. Man spricht in diesem Zusammenhang auch von "Multiplexing". Die Transformation des optischen Referenzwellenfeldes in das Bildwellenfeld, welches dann als Bildeffekt wahrnehmbar ist, erfolgt vorzugsweise unter Transmission des optischen Bildspeichers oder zumindest temporär unter Einkopplung in den optischen Bildspeicher. Hierzu weist der optische Bildspeicher die Einstrahlungsfläche auf. Die Auskoppelseite dient der Auskopplung aller mit dem optischen Bildspeicher erzeugten Bildfelder, unabhängig davon, an welcher Einstrahlungsfläche diese dem optischen Bildspeicher zugeführt worden sind. Um dies zu verdeutlichen, wird die Auskoppelseite daher im Folgenden teils auch als gemeinsame Auskoppelseite bezeichnet, wobei es sich bei der Auskoppelseite und der gemeinsamen Auskoppelseite konstruktiv um dasselbe Merkmal handelt.

Das Verfahren der Erfindung bietet den Vorteil, dass das optische Referenzwellenfeld dem optischen Bildspeicher nicht mehr aus einer vorausgesetzten Richtung her zugeführt werden muss. Insbesondere kann die Einstrahlungsfläche auch seitlich an dem optischen Bildspeicher vorgesehen sein und dann innerhalb des optischen Bildspeichers eine Lichtumlenkung in Richtung der Strukturen zur Transformation erfolgen. Beispielsweise kann der optische Bildspeicher hierzu Strukturen zur Umlenkung von Licht sowie lichttransmissive Bereiche umfassen. So kann Licht, beziehungsweise das optische Referenzwellenfeld, unter einem nahezu beliebigen Winkelversatz in den optischen Bildspeicher eindringen, diesen ganz oder abschnittsweise transmittieren und an den Strukturen zur Umlenkung von Licht in Richtung der Auskoppelseite umgelenkt werden. Letzteres erfolgt in einem einfachen bevorzugten Ausführungsbeispiel an inneren Grenzflächen des optischen Bildspeichers durch Reflexion oder Totalreflexion.

Bei konventionellen Lösungen hingegen ist die Einstrahlungsfläche parallel zur Auskoppelfläche angeordnet, so dass das optische Referenzwellenfeld umgelenkt werden muss, bevor es die Einstrahlungsfläche erreicht oder aber dem optischen Bildspeicher direkt in Richtung der Einstrahlungsfläche zugeführt werden muss. Entsprechend hoch ist hier der konstruktive Aufwand beziehungsweise entsprechend gering ist hier die Flexibilität in der Anordnung der Lichtquellen und des optischen Bildspeichers.

Diese Nachteile werden durch die vorliegende Erfindung ausgeräumt. Es ergibt sich ein signifikant erhöhter Spielraum bei der Nutzung vorhanden Bauraums. Insbesondere erhöht dies die Flexibilität bei der relativen Anordnung von Lichtquellen und dem optischen Bildspeicher signifikant. Hinsichtlich des Bauraums bietet das erfindungsgemäße Verfahren insbesondere auch den Vorteil, dass Lichtquellen zur Erzeugung des einen oder mehrere optischer Referenzfelder nahezu beliebig relativ zu dem optischen Bildspeicher angeordnet werden können, ohne dass dabei zusätzlich optische Komponenten zur Umlenkung des von den Lichtquellen emittierten Lichts hinzugezogen werden müssen. Hierzu wird der Winkelversatz zwischen Einstrahlungsfläche und Auskoppelseite entsprechend gewählt. Bei der Anordnung der Lichtquelle relativ zur Einstrahlungsfläche strebt der Fachmann bevorzugt eine Einstrahlung des Lichts in Normalrichtung zu der Einstrahlungsfläche an, um hier Verluste durch Reflexion zu verringern.

Erfindungsgemäß ist vorgesehen dass wenigstens ein erstes optisches Referenzwellenfeld und ein zweites optisches Referenzwellenfeld erzeugt werden und dass das erste optische Referenzwellenfeld an der ersten Einstrahlungsfläche und das zweite optische Referenzwellenfeld an einer zweiten Einstrahlungsfläche in den optischen Bildspeicher eingestrahlt werden und das erste und zweite optische Referenzwellenfeld simultan oder zeitversetzt in das erste Bildwellenfeld oder in unterschiedliche Bildwellenfelder transformiert werden und das erste Bildwellenfeld oder die unterschiedlichen Bildwellenfelder an der Auskoppelseite, die als gemeinsame Auskoppelseite dient, ausgekoppelt werden.

Zur Transformation des ersten und zweiten optischen Referenzwellenfelds kann der optische Bildspeicher beispielsweise Strukturen umfassen, mit denen die Transformation in das jeweilige Bildwellenfeld abhängig von der Wellenlänge des optischen Referenzwellenfelds ist oder auch abhängig ist von der Anordnung der zu dem jeweiligen optischen Referenzwellenfeld zugehörigen Einstrahlungsfläche.

Mit Vorteil lassen sich auf diese Weise unterschiedliche Bildeffekte mit einem optischen Bildspeicher auf flexible Weise erzeugen (Stichwort Multiplexing). Werden die unterschiedlichen Bildwellenfelder simultan erzeugt, so lassen sich beispielsweise unterschiedliche Bildeffekte ineinander verbauen. Dies ermöglicht beispielsweise eine Überlagerung von Bildeffekten in unterschiedlichen Farben. Werden die unterschiedlichen Bildfelder zeitversetzt erzeugt, ermöglicht dies beispielsweise ein schnelles Umschalten von dem einen zu dem anderen Bildeffekt.

All dies bietet insbesondere Vorteile hinsichtlich einer Intensität der erzeugten Bildeffekte sowie für deren Homogenität. Insbesondere durch eine wenigstens zweiseitige Lichteinstrahlung können die Intensität und Homogenität signifikant verbessert werden, da mehr Licht in den optischen Bildspeicher einbringbar ist. Es ist auch möglich qualitativ minderwertigere, dafür jedoch kostengünstigere Lichtquellen in höherer Anzahl zu verwenden. Dies ist möglich, da eine mehrseitige Lichteinstrahlung eine größere gesamte Einstrahlungsfläche bietet. Vorzugsweise kommen als Lichtquellen lichtemittierende Dioden zum Einsatz. Untersuchungen der Anmelderin haben ergeben, dass sich so ein Kosten-Nutzen-Optimum erreichen lässt. Diese beschriebene Ausführungsform eignet sich insbesondere auch zur Erzeugung von ineinander verbauten Lichteffekten, beispielsweise unter Verwendung von unterschiedlichen Wellenlängen für das jeweilige optische Referenzwellenfeld.

Erfindungsgemäß ist ferner vorgesehen, dass zwischen der ersten Einstrahlungsfläche und der Auskoppelseite der erste Winkelversatz besteht und dass wenigstens ein zweites optisches Referenzwellenfeld erzeugt wird, das in wenigstens eine zweite Einstrahlungsfläche eingestrahlt wird und die zweite Einstrahlungsfläche und die Auskoppelseite, die als gemeinsame Auskoppelseite dient, parallel zueinander orientiert sind. Das zweite Referenzwellenfeld wird also in Normalrichtung zu der gemeinsamen Auskoppelseite in den optischen Bildspeicher eingestrahlt. Wie auch in der zuvor beschriebenen Ausführungsform beträgt der erste Winkelversatz vorzugsweise 90° gegenüber der gemeinsamen Auskoppelseite. Weiterhin wie oben beschrieben wird das Licht vorzugsweise orthogonal zu der jeweiligen Einstrahlungsfläche in den optischen Bildspeicher eingestrahlt.

Diese vorliegende Ausführungsform bietet den Vorteil, dass besonders einfach unterschiedliche Bildeffekte ineinander verbaut werden können, deren Erzeugung abhängig von der jeweiligen Einstrahlungsrichtung ist. So lassen sich unterschiedliche Bildeffekte ineinander verbauen, die auch mit der gleichen Wellenlänge des jeweiligen optischen Referenzwellenfeldes hergestellt werden können. Ein Bildeffekt kann dann beispielsweise schnell und einfach auf einen anderen Bildeffekt umgeschaltet werden, indem das erste optische Referenzwellenfeld und das zweite optische Referenzwellenfeld über die jeweilige Einstrahlungsfläche zeitlich versetzt in den optischen Bildspeicher eingestrahlt werden. Natürlich kann die hier beschriebene Ausführungsform auch mit der zuvor beschriebenen kombiniert werden, indem wenigstens drei optische Referenzwellenfelder erzeugt und dem optischen Bildspeicher zugeführt werden.

In weiterer bevorzugter Ausgestaltung des Verfahrens der Erfindung ist vorgesehen, dass ein Strahlengang des ersten Referenzwellenfeldes und/oder des zweiten Referenzwellenfeldes über einen Reflektor und/oder eine Kollimationsoptik und/oder einen Lichtleiter beeinflusst wird.

Auf diese Weise lässt sich vorteilhaft die Effizienz der Einstrahlung des jeweiligen Referenzwellenfeldes in die jeweilige Einstrahlungsfläche verbessern. Beispielsweise kann die Anzahl verwendeter Leuchtmittel reduziert werden, wenn das Licht eines Leuchtmittels gezielter und verlustfreier der Einstrahlungsfläche zugeführt wird.

In weiterer bevorzugter Ausgestaltung des Verfahrens der Erfindung ist vorgesehen, dass der optische Bildspeicher wenigstens eine erste Substratschicht umfasst, welche die erste Einstrahlungsfläche und eine zweite Einstrahlungsfläche aufweist. Natürlich können auch mehrere Substratschichten vorgesehen sein, beispielsweise als Grund- und Deckschicht für einen Bereich mit den Strukturen zur Transformation der optischen Referenzwellenfelder in die Bildwellenfelder.

Dies bietet vielerlei Vorteile, so wird der Aufbau des optischen Bildspeichers beispielsweise robuster gegen mechanische äußere Einwirkungen. Dies kann beispielsweise durch eine höhere Steifigkeit oder einen Schutz der Strukturen zur Transformation der Referenzwellenfelder in die Bildwellenfelder mittels der Substratschicht erreicht werden. Weiterhin vorteilhaft lässt sich die eine oder mehrere Einstrahlungsflächen an der Substratschicht herstellen, die somit flexibel und einfach an unterschiedliche Anforderungen anpassbar ist. Dies bietet auch Vorteile hinsichtlich der Fertigung des optischen Bildspeichers. Dies ist insbesondere dann der Fall, wenn das diffraktive optische Element oder das Hologramm als Folie vorliegen. Selbstverständlich können das Hologramm oder das diffraktive optische Element auch direkt auf oder in der Substratschicht hergestellt sein.

Ein weiterer Aspekt der vorliegenden Erfindung betrifft eine Beleuchtungsanordnung für ein Fahrzeugt, umfassend wenigstens:
- eine erste Lichtquelle zur Erzeugung zumindest eines ersten optischen Referenzwellenfeldes;
- einen optischen Bildspeicher mit zumindest einer ersten Einstrahlungsfläche, wenigstens einer holografischen Schicht oder diffraktiven optische Schicht sowie einer Auskoppelseite;
- Mittel zur Lenkung des ersten optischen Referenzwellenfeldes in Richtung des optischen Bildspeichers, wobei
- zwischen der ersten Einstrahlungsfläche und der Auskoppelseite ein erster Winkelversatz besteht, der optische Bildspeicher ausgebildet ist, das optische Referenzwellenfeld durch Reflexion an inneren Grenzflächen zu leiten und wobei eine innere Grenzfläche des optischen Bildspeichers, die der holografischen Schicht oder diffraktiven optischen Schicht zugewandt ist, zumindest abschnittsweise anteilig lichtdurchlässig ist, wobei die Beleuchtungsanordnung wenigstens eine zweite Lichtquelle zur Erzeugung wenigstens eines zweiten optischen Referenzwellenfeldes umfasst oder die erste Lichtquelle zu diesem Zwecke ausgebildet ist und der optische Bildspeicher zusätzlich eine zweite Einstrahlungsfläche aufweist und ausgebildet ist, das erste und zweite optische Referenzwellenfeld in das erste Bildwellenfeld oder in unterschiedliche Bildwellenfelder zu transformieren, und zwischen der ersten Einstrahlungsfläche und der Auskoppelseite der erste Winkelversatz besteht und der optische Bildspeicher eine zweite Einstrahlungsfläche aufweist, die parallel zu der Auskoppelseite, die als gemeinsame Auskoppelseite dient, orientiert ist.

Die erfindungsgemäße Beleuchtungsanordnung dient insbesondere der Durchführung des oben beschriebenen erfindungsgemäßen Verfahrens. Die hinsichtlich des Verfahrens offenbarten technischen Merkmale gelten dementsprechend sinngemäß für die Beleuchtungsanordnung sowie umgekehrt. Selbiges gilt für die beschriebenen auf den jeweiligen technischen Merkmalen erwachsenden Vorteile.

Die erfindungsgemäße Beleuchtungsanordnung ist vorteilhaferweise besonders einfach an bestehende Bauraumverhältnisse flexibel anpassbar. Ferner weist sie eine besonders geringe konstruktive Komplexität auf.

Erfindungsgemäß ist vorgesehen, dass diese wenigstens eine zweite Lichtquelle zur Erzeugung wenigstens eines zweiten optischen Referenzwellenfeldes umfasst oder die erste Lichtquelle zu diesem Zwecke ausgebildet ist und dass der optische Bildspeicher zusätzlich eine zweite Einstrahlungsfläche aufweist und ausgebildet ist, das erste und zweite optische Referenzwellenfeld in das erste Bildwellenfeld oder in unterschiedliche Bildwellenfelder zu transformieren.

Die erste Lichtquelle kann beispielsweise dadurch zur Erzeugung des zweiten optischen Referenzwellenfeldes ausgebildet sein, dass sie mit einem Strahlteiler, Lichtleiter oder dergleichen gekoppelt ist.

Erfindungsgemäß ist ferner vorgesehen, dass zwischen der ersten Einstrahlungsfläche und der Auskoppelseite der erste Winkelversatz besteht, und dass der optische Bildspeicher eine zweite Einstrahlungsfläche aufweist, die parallel zu der Auskoppelseite, die als gemeinsame Auskoppelseite dient, orientiert ist.

Sofern wenigstens drei Einstrahlungsflächen vorgesehen sind, ist diese Ausführungsform mit der vorangehend beschriebenen selbstverständlich kombinierbar.

In weiterer bevorzugter Ausgestaltung der Beleuchtungsanordnung der Erfindung ist vorgesehen, dass diese einen Reflektor zur Umlenkung des zweiten Referenzwellenfeldes und/oder eine Kollimationsoptik zur Gleichrichtung des zweiten Referenzwellenfeldes umfasst.

In weiterer bevorzugter Ausgestaltung der Beleuchtungsanordnung der Erfindung ist vorgesehen, dass dieser eine Lichtleiter zur Lenkung des ersten Referenzwellenfeldes in Richtung der ersten Einstrahlungsfläche umfasst. Der Begriff des Lichtleiters umfasst in diesem Zusammenhang alle technischen Mittel, die dazu beitragen, das erste Referenzwellenfeld möglichst verlustfrei der ersten Einstrahlungsfläche zuzuführen. Im einfachsten Fall kann dies auch lediglich in Form einer entsprechenden Befestigungsposition einer Lichtquelle relativ zur Einstrahlungsfläche sein. Hierzu bedarf es geeigneter Befestigungsmittel, die der Fachmann selbstständig auswählt. Es kann dann weiterhin beispielsweise eine zusätzliche Blende vorgesehen sein. Natürlich kann auch eine Linse oder ein Lichtleiter im eigentlichen Sinne, wie beispielswese ein Glasfaserlichtleiter, vorgesehen sein.

In weiterer bevorzugter Ausgestaltung der Beleuchtungsanordnung der Erfindung ist vorgesehen, dass der optische Bildspeicher wenigstens eine erste Substratschicht umfasst, welche die erste Einstrahlungsfläche und eine zweite Einstrahlungsfläche aufweist.

In weiterer bevorzugten Ausgestaltung der Beleuchtungsanordnung der Erfindung ist vorgesehen, dass der optische Bildspeicher wenigstens eine erste Substratschicht umfasst, welche die erste Einstrahlungsfläche und eine zweite Einstrahlungsfläche aufweist und weiterhin eine zweite Substratschicht umfasst, wobei die holografische Schicht oder diffraktive optische Schicht zwischen der ersten und zweiten Substratschicht angeordnet ist. Die erste Einstrahlungsfläche kann beispielsweise seitlich an der ersten Substratschicht vorgesehen sein und die zweite Einstrahlungsfläche kann beispielsweise rückseitig an der ersten Substratschicht vorgesehen sein. Rückseitig bedeutet in diesem Fall, parallel zu der gemeinsamen Auskoppelseite. Die zweite Einstrahlungsfläche kann aber auch ebenso wie die erste seitlich an der ersten Substratschicht vorgesehen sein.

Die zweite Substratschicht bietet den Vorteil, dass die holografische Schicht beziehungsweise die diffraktive optische Schicht gegen schädliche Umwelteinflüsse geschützt sind. Weiterhin vorteilhaft lassen sich durch Herstellung der jeweiligen Einstrahlungsflächen an der ersten Substratschicht einfach und flexibel unterschiedliche Ausführungsformen der Beleuchtungsanordnung realisieren.

Ein dritter Aspekt der Erfindung betrifft ein Kraftfahrzeug, umfassend wenigstens eine erfindungsgemäße Beleuchtungsanordnung gemäß der obigen Beschreibung.

Wie auch im Falle des Verfahrens und der Beleuchtungsanordnung der Erfindung untereinander, lassen sich die technischen Merkmale des erfindungsgemäßen Kraftfahrzeugs und dessen Vorteile sinngemäß auf das Verfahren und die Beleuchtungsanordnung übertragen, sowie umgekehrt.

Vorzugsweise ist die erfindungsgemäße Beleuchtungsanordnung ganz oder teilweise in einer oder mehreren Rückleuchten, Scheiben, Bremsleuchten oder Karosserieteilen integriert. Der zuständige Fachmann ist selbstständig fähig, weitere Ausführungsformen hinsichtlich einer Integration der erfindungsgemäßen Beleuchtungsanordnung in einem Kraftfahrzeug vorzunehmen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- FIGUR 1:: prinzipenhafte Darstellung eines nicht-erfindungsgemäßen Verfahrens
- Figuren 2 - 3: prinziphafte Darstellungen eines erfindungsgemäßen Verfahrens in unterschiedlichen bevorzugten Ausführungsformen;
- Figur 4: eine prinziphafte Darstellung einer erfindungsgemäßen Beleuchtungsanordnung in unterschiedlichen bevorzugten Ausführungsformen;
- Figur 5: eine exemplarische Darstellung eines mit der Beleuchtungsanordnung aus Figur 4 erzeugten Bildeffekts nach einem erfindungsgemäßen Verfahren in einer bevorzugten Ausführungsform;
- Figur 6: eine prinziphafte Darstellung eines erfindungsgemäßen Kraftfahrzeugs mit einer erfindungsgemäßen Beleuchtungsanordnung in einer bevorzugten Ausführungsform; und die
- Figuren 7- 12: verschiedene bevorzugte Anwendungsbeispiele der erfindungsgemäßen Beleuchtungsanordnung in einem erfindungsgemäßen Kraftfahrzeugs zur Durchführung eines erfindungsgemäßen Verfahrens.

Sofern in den Figuren identische Bezugszeichen verwendet werden, so beschreiben diese identische technische Merkmale. Das in der nachfolgenden Beschreibung hinsichtlich eines Bezugszeichen gesagte, gilt dann zumindest ergänzend für alle Figuren, in denen das betreffende Bezugszeichen verwendet wird, sofern bezüglich einzelner Figuren nichts Abweichendes beschrieben ist.

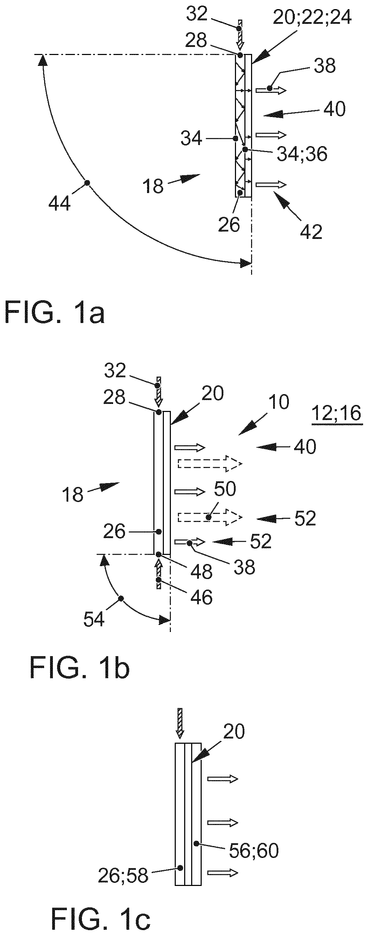

Figur 1a zeigt eine erste Ausführungsform eines nicht-erfindungsgemäßen Verfahrens zur Erzeugung von Bildeffekten 10 in einem hier lediglich angedeuteten Innenraum 12 eines hier nicht dargestellten Fahrzeugs 14. Da die Bildeffekte 10 auch außerhalb des Fahrzeugs 14 erzeugt werden können, ist ein das hier nicht dargestellte Fahrzeug 14 umgebenes Umweltsystem 16 ebenfalls lediglich angedeutet (vergleiche Figur 1b).

Figur 1a zeigt einen optischen Bildspeicher 18. Der optische Bildspeicher 18 kann eine holografische Schicht 20 oder ein diffraktives optisches Element 22 umfassen. In dem vorliegenden Beispiel wird im Folgenden rein exemplarisch von einer holografischen Schicht 20 ausgegangen. Die holografische Schicht 20 liegt hier als Folie 24 vor. Die Folie 24 ist auf einer ersten Substratschicht 26 aufgetragen. Seitlich an der ersten Substratschicht 26 ist eine erste Einstrahlungsfläche 28 vorgesehen.

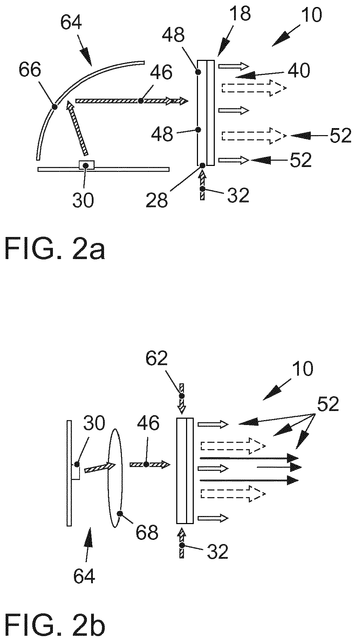

In einem ersten Verfahrensschritt wird nun mit einer hier nicht dargestellten Lichtquelle 30 (vergleiche beispielsweise Figur 2) ein erstes optisches Referenzwellenfeld 32 erzeugt und in einem zweiten Verfahrensschritt in Richtung des optischen Bildspeichers 18 gelenkt. In einem dritten Verfahrensschritt erfolgt eine Einstrahlung des ersten optischen Referenzwellenfeldes 32 in die erste Einstrahlungsfläche 28. Das erste optische Referenzwellenfeld 28 tritt also durch die erste Einstrahlungsfläche 28 hindurch und propagiert dann im Inneren der ersten Substratschicht 26. Die Propagation erfolgt durch Reflexion des ersten Referenzwellenfeldes 32 an inneren Grenzflächen 34 der ersten Substratschicht 26. Eine der Folie 24 zugewandte innere Grenzfläche 36 weist anteilig lichttransmissive Eigenschaften auf und erlaubt es somit stets einem Teil des optischen Referenzwellenfeldes 32 durch sie hindurchzutreten. Das optische Referenzwellenfeld 32 gelangt so in die Folie 24 beziehungsweise in die holografische Schicht 20.

In einem vierten Verfahrensschritt erfolgt in der holografischen Schicht 20 eine Transformation des ersten optischen Referenzwellenfeldes 32 in ein erstes Bildwellenfeld 38.

In einem fünften Verfahrensschritt erfolgt dann eine Auskopplung des ersten Bildwellenfeldes 38 aus der holografischen Schicht 20 beziehungsweise der Folie 24 an einer Auskoppelseite 40. Das erste Bildwellenfeld 38 ist dann als Bildeffekt 42 wahrnehmbar.

Gut erkennbar in Figur 1a ist, dass zwischen der ersten Einstrahlungsfläche 28 und der Auskoppelseite 40 ein erster Winkelversatz 44 besteht. Dieser ist vorliegend unter Darstellung strichpunktartiger Verlängerungen der ersten Einstrahlungsfläche 28 und der Auskoppelseite 40 verdeutlicht.

Somit kann die nicht dargestellte Lichtquelle 30 beispielsweise vor der ersten Einstrahlungsfläche 28 angeordnet sein und das erste Bildwellenfeld 38 im Wesentlichen orthogonal (entsprechend dem ersten Winkelversatz 44) hierzu aus dem optischen Bildspeicher 18 ausgekoppelt werden, ohne dass zusätzliche technische Mittel zur Umlenkung des ersten optischen Referenzwellenfeldes 32 außerhalb des optischen Bildspeichers 18 benötigt werden. Somit lässt sich vorhandener Bauraum besonders effizient ausnutzen.

Figur 1b zeigt eine weitere Ausführungsform eines nicht-erfindungsgemäßen Verfahrens. Hier wird zusätzlich ein zweites optisches Referenzwellenfeld 46 erzeugt. Die erste Substratschicht 26 weist eine zweite Einstrahlungsfläche 48 auf, die der ersten Einstrahlungsfläche 28 gegenüberliegend angeordnet ist. Das erste optische Referenzwellenfeld 32 und das zweiten optische Referenzwellenfeld 46 werden dann simultan oder zeitlich versetzt über die erste Einstrahlungsfläche 28 beziehungsweise die zweite Einstrahlungsfläche 48 in den optischen Bildspeicher 18 eingestrahlt. Dementsprechend erfolgt simultan oder zeitlich versetzt eine Transformation des ersten optischen Referenzwellenfeldes 32 in das erste Bildwellenfeld 38 und des zweiten optischen Referenzwellenfeldes 46 in das zweite Bildwellenfeld 50. Die Bildeffekte 10 sind somit durch unterschiedliche Bildwellenfelder 52 realisiert.

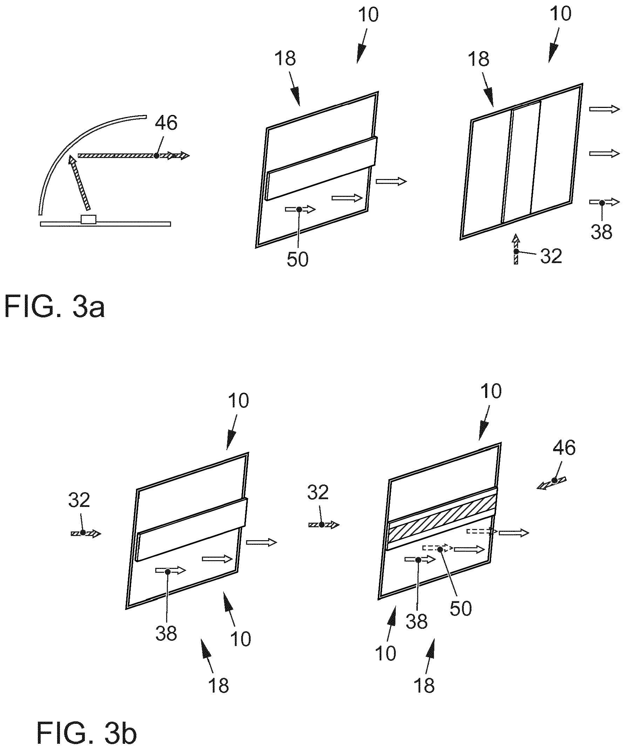

Die Transformationen unterschiedlicher Bildwellenfelder 52 erfolgt vorliegend rein exemplarisch durch Verwendung unterschiedlicher Wellenlängen für das erste optische Referenzwellenfeld 32 und das zweite optische Referenzwellenfeld 46 in Verbindung mit einer holografischen Schicht 20, die ausgebildet ist, unterschiedliche Wellenlängen in unterschiedliche Bildwellenfelder 52 zu transformieren. Somit lassen sich beispielsweise auch die in Figur 3 näher beschriebenen Effekte erreichen.

Analog zu der Darstellung in Figur 1a ist in Figur 1b ein zweiter Winkelversatz 54 zwischen der Auskoppelseite 40, die als gemeinsame Auskoppelseite dient, und der zweiten Einstrahlungsfläche 48 gezeigt.

In Figur 1c ist eine weitere Ausführungsform eines nicht-erfindungsgemäßen Verfahrens gezeigt, die sich an die Ausführungsform aus Figur 1a anlehnt. In Figur 1c ist eine zusätzliche zweite Substratschicht 56 gezeigt. Die exemplarisch dargestellte holografische Schicht 20 ist zwischen der ersten Substratschicht 26 und der zweiten Substratschicht 56 angeordnet. Diese fungieren somit als Grundschicht 58 und Deckschicht 60.

In Figur 2a ist eine erste Ausführungsform des erfindungsgemäßen Verfahrens gezeigt, in dem das zweite optische Referenzwellenfeld 46 in die zweite Einstrahlungsfläche 48 eingestrahlt wird, und die zweite Einstrahlungsfläche 48 dabei parallel zu der Auskoppelseite 40, die als gemeinsame Auskoppelseite dient, orientiert ist. Wie in Figur 1b werden auch hier unterschiedliche Bildeffekte 10 erzeugt. Rein exemplarisch wird hier für das erste optische Referenzwellenfeld 32 und das zweite optische Referenzwellenfeld 46 die gleiche Wellenlänge verwendet. Der optische Bildspeicher 18 transformiert diese in unterschiedliche Bildwellenfelder 52 unter Ausnutzung der unterschiedlichen Richtungen, aus denen die Einstrahlung in die jeweilige erste und zweite Einstrahlungsfläche 28, 48 erfolgt.

Figur 2b zeigt demgegenüber eine Ausführungsform des erfindungsgemäßen Verfahrens, in der das erste und zweite optische Referenzwellenfeld 32, 46 und zusätzlich ein drittes optisches Referenzwellenfeld 62 erzeugt werden. Diese Ausführungsform stelle im Grunde genommen eine Kombination der Ausführungsformen in Figur 2a mit der aus Figur 1a dar. Die Bildeffekte 10 werden hier in Form von drei unterschiedlichen Bildwellenfeldern 52 realisiert. Selbstverständlich können auch diese zeitlich simultan oder versetzt erzeugt werden. Zweckmäßigerweise kann für das erste und zweite optische Referenzwellenfeld 32, 46 dieselbe Wellenlänge verwendet werden. Für das dritte optische Referenzwellenfeld 62 bietet sich eine unterschiedliche Wellenlänge an.

Auch mit den in Figur 2 gezeigten Ausführungsformen lassen sich beispielsweise die in Figur 3 näher beschriebenen Effekte erreichen.

In den Figuren 2a und 2b gezeigte technische Mittel 64 sind optional und rein exemplarisch dargestellt. Sie umfassen, neben nicht weiter dargestellten Befestigungsmitteln, in Figur 2a rein exemplarisch einen Reflektor 66 und in Figur 2b ebenfalls rein exemplarisch eine Kollimationsoptik 68.

In Anlehnung an die vorhergehende Beschreibung zeigt Figur 3 zwei weitere bevorzugte Ausführungsformen des erfindungsgemäßen Verfahrens. Figur 3a zeigt dabei die Möglichkeit zwischen unterschiedlichen Bildeffekten 10 hin und her zu schalten. Figur 3b zeigt die Möglichkeit unterschiedliche Bildeffekte 10 ineinander zu verbauen und/oder zwischen ihnen hin und her zu schalten.

Der rechte Teil der Figur 3a zeigt exemplarisch, wie mit dem ersten optischen Referenzwellenfeld 32 das erste Bildwellenfeld 38 erzeugt wird. Dieses ist als Bildeffekt in Form eines im Wesentlichen vertikal angeordneten Rechtecks wahrnehmbar. Der linke Teil der Figur 3a zeigt demgegenüber, wie mit dem zweiten optischen Referenzwellenfeld 46 das zweite Bildwellenfeld 50 erzeugt wird. Dieses ist als Bildeffekt in Form eines im Wesentlichen horizontal angeordneten Rechtecks wahrnehmbar. Beide Bildeffekte 10 werden mit dem gleichen optischen Bildspeicher 18 erzeugt. Zu diesem Zweck kann der optische Bildspeicher 18 beispielsweise Strukturen zur Transformation der optischen Referenzwellenfelder 32, 46 in das jeweilige Bildwellenfeld 38, 50 aufweisen, die selektiv in Abhängigkeit der jeweiligen Einstrahlungsrichtung funktionieren. Durch zeitlich versetztes An- und Ausschalten der optischen Referenzwellenfelder 32, 46 kann dann zwischen den Bildeffekten 10 hin und her geschaltet werden.

Figur 3b zeigt eine weitere Möglichkeit zwischen Bildeffekten 10 hin und her zu schalten, wobei im rechten Teil der Figur 3b zwei Bildeffekte 10 mit dem ersten und zweiten Bildwellenfeld 38, 50 realisiert werden. Im Gegensatz zu Figur 3a sind bei Figur 3b die Bildeffekte 10 ineinander verbaut realisiert. Hier können beispielsweise unterschiedliche Wellenlängen für das erste und zweite optische Referenzfeld 38, 46 verwendet werden, um die Bildeffekte 10 beispielsweise farblich voneinander abzuheben.

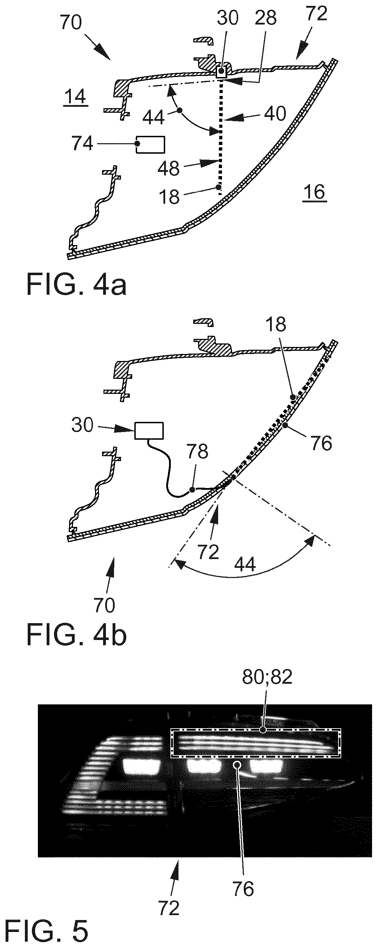

Figur 4 zeigt eine erfindungsgemäße Beleuchtungsanordnung 70 in zwei unterschiedlichen Ausführungsformen.

In Figur 4a gezeigt, ist eine Rückleuchte 72 eines nicht weiter dargestellten Fahrzeugs 14. Innerhalb der Rückleuchte 72 ist eine erste Lichtquelle 30 angeordnet, die ausgebildet ist, das erste optische Referenzwellenfeld 32 zu erzeugen. Die erste Lichtquelle 30 ist seitlich an dem nur angedeuteten optischen Bildspeicher 18 vor der ersten Einstrahlungsfläche 28 angeordnet. Somit ergibt sich zwischen der ersten Einstrahlungsfläche 28 und der Auskoppelseite 40 der erste Winkelversatz 44. Dieser beträgt vorliegend 90°. Die Beleuchtungsanordnung 70 umfasst zudem eine zweite Lichtquelle 74. Diese ist ausgebildet, das zweite optische Referenzwellenfeld 46 zu erzeugen. Die zweite Einstrahlungsfläche 48 für das zweite optische Referenzwellenfeld 46 ist hier parallel zu der Auskoppelseite 40, die als gemeinsame Auskoppelseite dient, angeordnet.

In der in Figur 4b gezeigten Ausführungsform ist der optische Bildspeicher 18 direkt hinter einer Lichtscheibe 76 der Rückleuchte 72 angeordnet. Die seitliche Einstrahlung des ersten optischen Referenzwellenfeldes 32 ist hier ausgehend von der ersten Lichtquelle 30 über einen Lichtleiter 78 realisierbar.

Figur 5 zeigt exemplarisch einen Bildeffekt 80, der mit der Beleuchtungsanordnung 70 aus Figur 4b erzeugt wird. Gut zu erkennen ist hier, wie im Bereich der eigentlich klaren Lichtscheibe 76 unter Erzeugung des ersten optischen Referenzwellenfeldes 32 und dessen Transformation in das erste Bildwellenfeld 38 ein horizontal verlaufendes leuchtendes Streifenmuster 82 erzeugt wird. In diesem Beispiel umfasst der optische Bildspeicher 18 rein exemplarisch eine diffraktive optische Schicht. Als erste Lichtquelle 30 wird ebenfalls rein exemplarisch eine Leuchtdiode mit einer Kohärenzlänge von 10 µm verwendet.

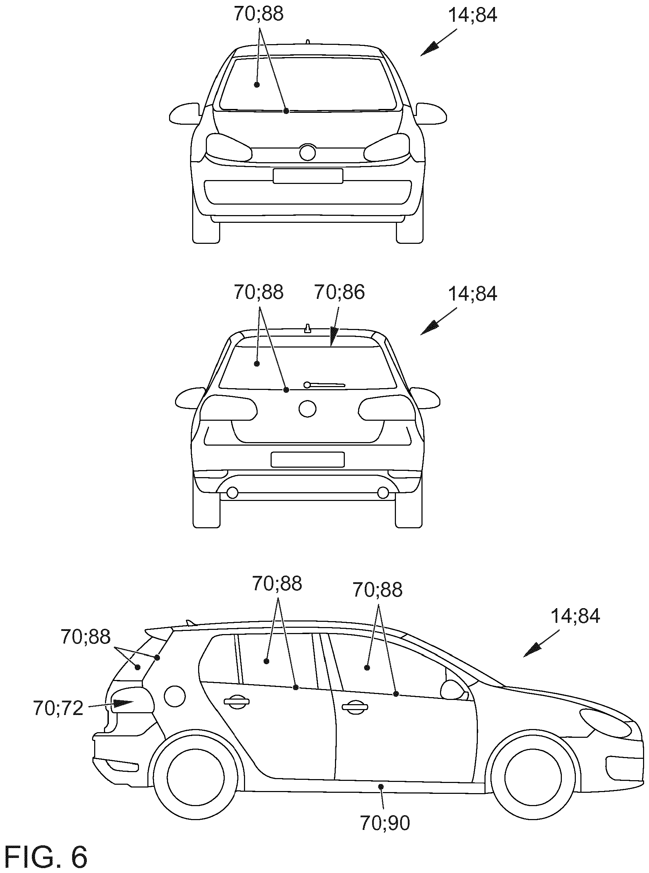

Figur 6 zeigt ein Fahrzeug 14, welches vorliegend ein erfindungsgemäßes Kraftfahrzeug 84 ist. Das Kraftfahrzeug 84 umfasst wenigstens eine erfindungsgemäße Beleuchtungsanordnung 70, die rein exemplarisch an unterschiedlichen Einbaupositionen dargestellt ist. So kann die Beleuchtungsanordnung 70 beispielsweise in der Rückleuchte 72 des Kraftfahrzeugs 84 integriert sein. Sie kann aber auch in einer Bremsleuchte 86 des Kraftfahrzeugs 84 integriert sein. Ferner kann die Beleuchtungsanordnung 70 im Bereich von Scheiben 88 des Kraftfahrzeugs 84 integriert sein. Wird als optischer Bildspeicher 18 beispielsweise ein Volumenhologramm verwendet, so kann dieses direkt in einer Scheibe eingebettet hergestellt sein. Ferner kann die Beleuchtungsanordnung 70 auch im Bereich eines Karosserieteils wie beispielsweise eines Schwellers 90 des Kraftfahrzeugs 84 angeordnet sein. Hier bietet sich beispielsweis die Verwendung einer diffraktiven optischen Schicht 22 an.

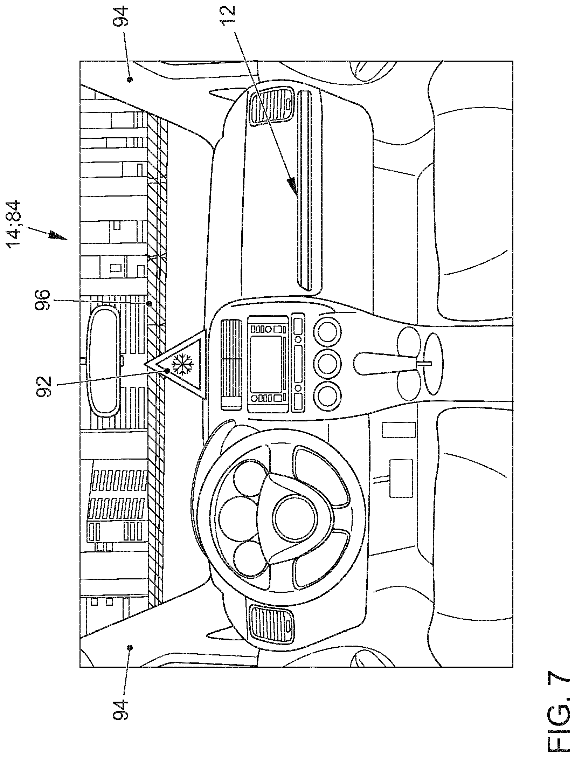

Figur 7 zeigt ein Anwendungsbeispiel, in dem mittels eines Volumenhologramms zusätzliche Symbole 92 oder Beleuchtungen 94 in einer Frontscheibe 96 des Kraftfahrzeugs 84 erzeugt werden. So kann die Frontscheibe 96 beispielsweise als kostengünstiges Head-Up-Display dienen.

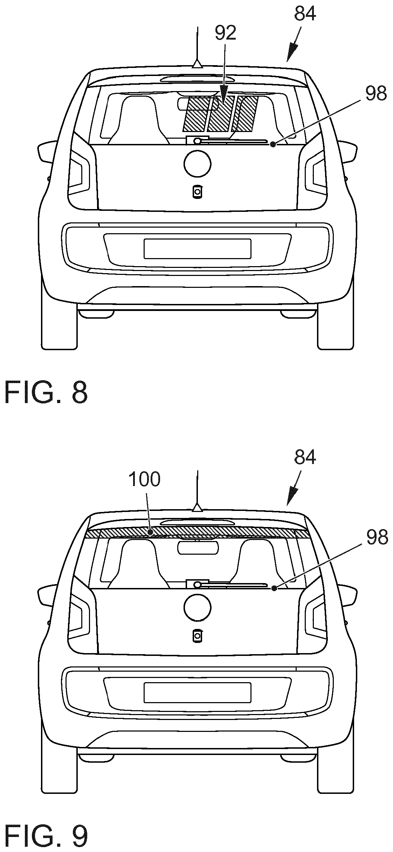

Figur 8 zeigt die Erzeugung von Symbolen 92 mit einem Volumenhologramm in einer Heckscheibe 98 des Kraftfahrzeugs 84. Es handelt sich hierbei rein exemplarisch um ein elektrisch betriebenes Kraftfahrzeug 84. Die Symbole 92 zeigen dabei einen Ladestatus einer Batterie des Kraftfahrzeugs 84 an.

Figur 9 zeigt das Kraftfahrzeug 84 aus Figur 8, wobei in der Heckscheibe 98 eine zusätzliche dritte Bremsleuchte 100 erzeugt wird.

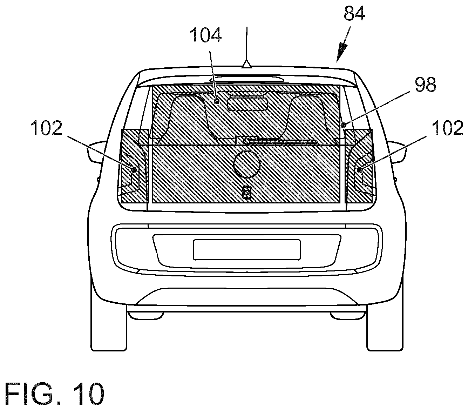

Figur 10 zeigt das Kraftfahrzeug 84 aus den Figuren 8 und 9, wobei die Heckscheibe 98 vorliegend dazu verwendet wird, ganze Lichtfunktionsgruppen, wie eine Kombination aus Schlusslicht 102 und Bremslicht 104 anzuzeigen. Unter Verwendung von Strukturen zur Transformation von Referenzwellenfeldern in Bildwellenfelder in Abhängigkeit von Einstrahlungsrichtungen und/oder Wellenlängen, ist es auch möglich, beispielsweise zwischen den in den Figuren 8 bis 10 erzielten Effekten hin und her zu schalten. So kommt der Heckscheibe 98 gewissermaßen die Funktion eines flexiblen Displays zu.

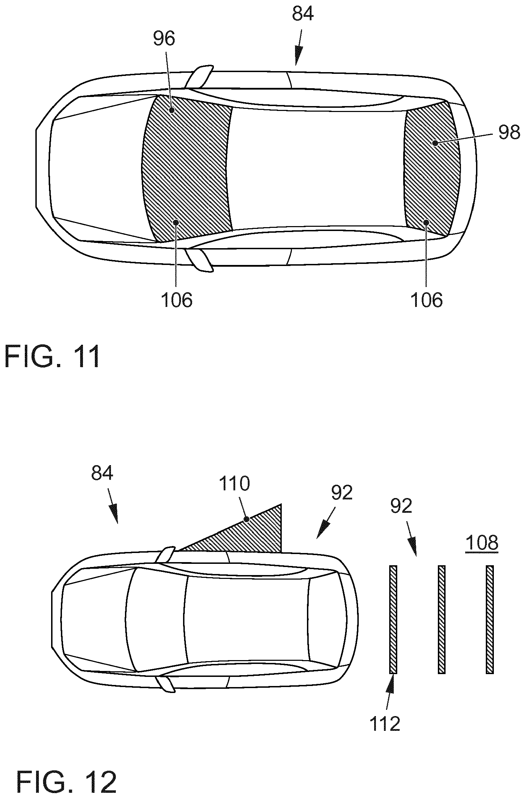

Figur 11 zeigt ein weiteres erfindungsgemäßes Kraftfahrzeug 84 in einer Draufsicht. Die Frontscheibe 96 und die Heckscheibe 98 des Kraftfahrzeuges 84 werden hier dazu verwendet, ein erweitertes Warnblinklicht 106 anzuzeigen.

Figur 12 zeigt schließlich einen Anwendungsfall, in dem mit dem optischen Bildspeicher 18, der in diesem Fall eine diffraktive optische Schicht 22 umfasst, Symbole 92 auf eine lediglich angedeutete Fahrbahnoberfläche 108 projiziert werden. Die Symbole 92 können beispielsweise einen Lichtteppich 110 darstellen. Der Lichtteppich 110 kann auch durch schnelles Umschalten von Bildeffekten in Form einer Animation dargestellt werden. Selbiges gilt für die weiterhin beispielhaft dargestellten Symbole 92 in Form von Abstandslinien 112 zur Warnung nachfolgender Fahrzeuge.

### Bezugszeichenliste

- 10: Bildeffekte
- 12: Innenraum
- 14: Fahrzeug
- 16: Umweltsystem
- 18: optischer Bildspeicher
- 20: holografische Schicht
- 22: diffraktive optische Schicht
- 24: Folie
- 26: erste Substratschicht
- 28: erste Einstrahlungsfläche
- 30: erste Lichtquelle
- 32: erstes optisches Referenzwellenfeld
- 34: innere Grenzflächen
- 36: innere Grenzfläche
- 38: erstes Bildwellenfeld
- 40: Auskoppelseite
- 42: Bildeffekt
- 44: erster Winkelversatz
- 46: zweites optisches Referenzwellenfeld
- 48: zweite Einstrahlungsfläche
- 50: zweites Bildwellenfeld
- 52: unterschiedliche Bildwellenfelder
- 54: zweiter Winkelversatz
- 56: zweite Substratschicht
- 58: Grundschicht
- 60: Deckschicht
- 62: drittes optisches Referenzwellenfeld
- 64: technische Mittel
- 66: Reflektor
- 68: Kollimationsoptik
- 70: Beleuchtungsanordnung
- 72: Rückleuchte
- 74: zweite Lichtquelle
- 76: Lichtscheibe
- 78: Lichtleiter
- 80: Bildeffekt
- 82: Streifenmuster
- 84: Kraftfahrzeug
- 86: Bremsleuchte
- 88: Bereich von Scheiben
- 90: Schweller
- 92: Symbole
- 94: Beleuchtungen
- 96: Frontscheibe
- 98: Heckscheibe
- 100: dritte Bremsleuchte
- 102: Schlusslicht
- 104: Bremslicht
- 106: erweitertes Warnblinklicht
- 108: Fahrbahnoberfläche
- 110: Lichtteppich
- 112: Abstandslinien

## Patentansprüche

1. Verfahren zur Erzeugung von Bildeffekten (10) im Innenraum (12) eines Fahrzeugs (14) und/oder außerhalb des Fahrzeugs (14), umfassend wenigstens die Schritte:
- Erzeugung zumindest eines ersten optischen Referenzwellenfeldes (32);
- Lenkung des ersten optischen Referenzwellenfeldes (32) in Richtung wenigstens eines optischen Bildspeichers (18);
- Einstrahlung des ersten optischen Referenzwellenfeldes (32) in zumindest eine Einstrahlungsfläche (28) des optischen Bildspeichers (18);
- Transformation des ersten optischen Referenzwellenfeldes (32) in wenigstens ein erstes Bildwellenfeld (38) über wenigstens eine holografische Schicht (20) oder diffraktive optische Schicht (22) des optischen Bildspeichers (18); und
- Auskopplung des ersten Bildwellenfeldes (38) aus der holografischen Schicht (20) oder diffraktiven optischen Schicht (22) an einer Auskoppelseite (40); wobei zwischen einer ersten Einstrahlungsfläche (28), über die zumindest das erste optische Referenzwellenfeld (32) eingestrahlt wird und der Auskoppelseite (40), über die zumindest das erste Bildwellenfeld (38) ausgekoppelt wird, ein erster Winkelversatz (44) besteht, das optische Referenzwellenfeld (32) im optischen Bildspeicher (18) durch Reflexion an inneren Grenzflächen (34; 36) geleitet wird und zumindest abschnittsweise anteilig durch eine innere Grenzfläche (36) des optischen Bildspeichers (18), die der holografischen Schicht (20) oder diffraktiven optischen Schicht (22) zugewandt ist und die zumindest abschnittsweise anteilig lichtdurchlässig ist, hindurchtritt,
wobei wenigstens ein erstes optisches Referenzwellenfeld (32) und ein zweites optisches Referenzwellenfeld (46) erzeugt werden und das erste optische Referenzwellenfeld (32) an der ersten Einstrahlungsfläche (28) und das zweite optische Referenzwellenfeld (46) an einer zweiten Einstrahlungsfläche (48) in den optischen Bildspeicher (18) eingestrahlt werden und das erste und zweite optische Referenzwellenfeld (46) simultan oder zeitversetzt in das erste Bildwellenfeld (38) oder in unterschiedliche Bildwellenfelder (52) transformiert werden und das erste Bildwellenfeld (38) oder die unterschiedlichen Bildwellenfelder (52) an der Auskoppelseite (40), die als gemeinsame Auskoppelseite dient, ausgekoppelt werden, und zwischen der ersten Einstrahlungsfläche (28) und der Auskoppelseite (40) der erste Winkelversatz (44) besteht und wenigstens ein zweites optisches Referenzwellenfeld (46) erzeugt wird, das in wenigstens eine zweite Einstrahlungsfläche (48) eingestrahlt wird, **dadurch gekennzeichnet, dass** die zweite Einstrahlungsfläche (48) und die Auskoppelseite (40), die als gemeinsame Auskoppelseite dient, parallel zueinander orientiert sind.

2. Verfahren nach Anspruch 1, **dadurch gekennzeichnet, dass** ein Strahlengang des ersten Referenzwellenfeldes (32) und/oder des zweiten Referenzwellenfeldes (46) über einen Reflektor (66) und/oder eine Kollimationsoptik (68) und/oder einen Lichtleiter (78) beeinflusst werden.

3. Verfahren nach einem der vorhergehenden Ansprüche, **dadurch gekennzeichnet, dass** der optische Bildspeicher (18) wenigstens eine erste Substratschicht (26) umfasst, welche die erste Einstrahlungsfläche (28) und eine zweite Einstrahlungsfläche (48) aufweist.

4. Beleuchtungsanordnung (70) für ein Fahrzeugs (84), umfassend wenigstens:
- eine erste Lichtquelle (30) zur Erzeugung zumindest eines ersten optischen Referenzwellenfeldes (32);
- einen optischen Bildspeicher (18) mit zumindest einer ersten Einstrahlungsfläche (28), wenigstens einer holografischen Schicht (20) oder diffraktiven optische Schicht (22) sowie einer Auskoppelseite (40);
- technische Mittel (64) zur Lenkung des ersten optischen Referenzwellenfeldes (32) in Richtung des optischen Bildspeichers (18); wobei
- zwischen der ersten Einstrahlungsfläche (28) und der Auskoppelseite (40) ein erster Winkelversatz (44) besteht,
der optische Bildspeicher (18) ausgebildet ist, das optische Referenzwellenfeld (32) durch Reflexion an inneren Grenzflächen (34; 36) zu leiten und dass eine innere Grenzfläche (36) des optischen Bildspeichers (18), die der holografischen Schicht (20) oder diffraktiven optischen Schicht (22) zugewandt ist, zumindest abschnittsweise anteilig lichtdurchlässig ist,
wobei die Beleuchtungsanordnung (70) wenigstens eine zweite Lichtquelle (74) zur Erzeugung wenigstens eines zweiten optischen Referenzwellenfeldes (46) umfasst oder die erste Lichtquelle (30) zu diesem Zwecke ausgebildet ist und der optische Bildspeicher (18) zusätzlich eine zweite Einstrahlungsfläche (48) aufweist und ausgebildet ist, das erste und zweite optische Referenzwellenfeld (32;46) in das erste Bildwellenfeld (38) oder in unterschiedliche Bildwellenfelder (52) zu transformieren, und zwischen der ersten Einstrahlungsfläche (28) und der Auskoppelseite (40) der erste Winkelversatz (44) besteht und **dadurch gekennzeichnet, dass** der optische Bildspeicher (18) eine zweite Einstrahlungsfläche (48) aufweist, die parallel zu der Auskoppelseite (40), die als gemeinsame Auskoppelseite dient, orientiert ist.

5. Beleuchtungsanordnung (70) nach Anspruch 4, **dadurch gekennzeichnet, dass** diese einen Reflektor (66) zur Umlenkung des zweiten Referenzwellenfeldes (46) und/oder eine Kollimationsoptik (68) zur Gleichrichtung des zweiten Referenzwellenfeldes (46) umfasst.

6. Beleuchtungsanordnung (70) nach einem der Ansprüche 4 bis 5, **dadurch gekennzeichnet, dass** diese einen Lichtleiter (78) zur Lenkung des ersten Referenzwellenfeldes (32) in Richtung der ersten Einstrahlungsfläche (28) umfasst.

7. Beleuchtungsanordnung (70) nach einem der Ansprüche 4 bis 6, **dadurch gekennzeichnet, dass** der optische Bildspeicher (18) wenigstens eine erste Substratschicht (26) umfasst, welche die erste Einstrahlungsfläche (28) und eine zweite Einstrahlungsfläche (48) aufweist.

8. Beleuchtungsanordnung (70) nach einem der Ansprüche 4 bis 7, **dadurch gekennzeichnet, dass** der optische Bildspeicher (18) wenigstens eine erste Substratschicht (26) umfasst, welche die erste Einstrahlungsfläche (28) und eine zweite Einstrahlungsfläche (48) aufweist und weiterhin eine zweite Substratschicht (56) umfasst, wobei die holografische Schicht (20) oder diffraktive optische Schicht (22) zwischen der ersten und zweiten Substratschicht (26;56) angeordnet ist.

9. Kraftfahrzeug, umfassend wenigstens eine Beleuchtungsanordnung (70) für ein Fahrzeug (84) nach einem der Ansprüche 4 bis 8.

## Claims

1. Method for generating image effects (10) in the interior (12) of a vehicle (14) and/or outside the vehicle (14), comprising at least the steps of:
- generating at least one first optical reference wave field (32);
- directing the first optical reference wave field (32) in the direction of at least one optical image storage device (18);
- radiating the first optical reference wave field (32) into at least one irradiation surface (28) of the optical image storage device (18);
- transforming the first optical reference wave field (32) into at least one first image wave field (38) by way of at least one holographic layer (20) or diffractive optical layer (22) of the optical image storage device (18); and
- outcoupling the first image wave field (38) from the holographic layer (20) or diffractive optical layer (22) at an outcoupling side (40); wherein
between a first irradiation surface (28), via which at least the first optical reference wave field (32) is radiated in, and the outcoupling side (40), via which at least the first image wave field (38) is outcoupled, there is a first angular offset (44), the optical reference wave field (32) is guided in the optical image storage device (18) by reflection at inner interfaces (34; 36) and passes at least sectionally proportionally through an inner interface (36) of the optical image storage device (18) which faces the holographic layer (20) or diffractive optical layer (22) and which is at least sectionally proportionally light-transmissive, wherein
at least one first optical reference wave field (32) and one second optical reference wave field (46) are generated and the first optical reference wave field (32) is radiated into the optical image storage device (18) at the first irradiation surface (28) and the second optical reference wave field (46) is radiated into the optical image storage device (18) at a second irradiation surface (48), and the first and the second optical reference wave field (46) are transformed simultaneously or in a time-shifted manner into the first image wave field (38) or into different image wave fields (52), and the first image wave field (38) or the different image wave fields (52) is/are outcoupled at the outcoupling side (40) serving as a common outcoupling side, and between the first irradiation surface (28) and the outcoupling side (40) there is the first angular offset (44) and at least one second optical reference wave field (46) is generated, which is radiated into at least one second irradiation surface (48), **characterized in that** the second irradiation surface (48) and the outcoupling side (40) serving as a common outcoupling side are oriented parallel to one another.

2. Method according to Claim 1, **characterized in that** a beam path of the first reference wave field (32) and/or of the second reference wave field (46) is influenced by way of a reflector (66) and/or a collimation optical unit (68) and/or a light guide (78).

3. Method according to either of the preceding claims, **characterized in that** the optical image storage device (18) comprises at least one first substrate layer (26) having the first irradiation surface (28) and a second irradiation surface (48).

4. Illumination arrangement (70) for a vehicle (84), comprising at least:
- a first light source (30) for generating at least one first optical reference wave field (32);
- an optical image storage device (18) having at least one first irradiation surface (28), at least one holographic layer (20) or diffractive optical layer (22), and an outcoupling side (40);
- technical means (64) for directing the first optical reference wave field (32) in the direction of the optical image storage device (18); wherein
- between the first irradiation surface (28) and the outcoupling side (40) there is a first angular offset (44),
the optical image storage device (18) is designed to guide the optical reference wave field (32) by reflection at inner interfaces (34; 36), and an inner interface (36) of the optical image storage device (18) which faces the holographic layer (20) or diffractive optical layer (22) is at least sectionally proportionally light-transmissive,
wherein
the illumination arrangement (70) comprises at least one second light source (74) for generating at least one second optical reference wave field (46) or the first light source (30) is designed for this purpose and the optical image storage device (18) additionally has a second irradiation surface (48) and is designed to transform the first and second optical reference wave fields (32; 46) into the first image wave field (38) or into different image wave fields (52), and between the first irradiation surface (28) and the outcoupling side (40) there is the first angular offset (44), **characterized in that**
the optical image storage device (18) has a second irradiation surface (48) oriented parallel to the outcoupling side (40) serving as a common outcoupling side.

5. Illumination arrangement (70) according to Claim 4, **characterized in that** it comprises a reflector (66) for deflecting the second reference wave field (46) and/or a collimation optical unit (68) for aligning the second reference wave field (46).

6. Illumination arrangement (70) according to either of Claims 4 and 5, **characterized in that** it comprises a light guide (78) for directing the first reference wave field (32) in the direction of the first irradiation surface (28).

7. Illumination arrangement (70) according to any of Claims 4 to 6, **characterized in that** the optical image storage device (18) comprises at least one first substrate layer (26) having the first irradiation surface (28) and a second irradiation surface (48).

8. Illumination arrangement (70) according to any of Claims 4 to 7, **characterized in that** the optical image storage device (18) comprises at least one first substrate layer (26) having the first irradiation surface (28) and a second irradiation surface (48) and furthermore comprises a second substrate layer (56), wherein the holographic layer (20) or diffractive optical layer (22) is arranged between the first and second substrate layers (26; 56).

9. Motor vehicle, comprising at least one illumination arrangement (70) for a vehicle (84) according to any of Claims 4 to 8.

## Revendications

1. Procédé de génération d'effets d'image (10) dans l'habitacle (12) d'un véhicule (14) et/ou à l'extérieur du véhicule (14), ledit procédé comprenant au moins les étapes suivantes :
- générer au moins un premier champ d'onde optique de référence (32) ;
- orienter le premier champ d'onde optique de référence (32) en direction d'au moins une mémoire d'image optique (18) ;
- rayonner le premier champ d'onde optique de référence (32) de manière incidente à l'au moins une surface de rayonnement incident (28) de la mémoire d'image optique (18) ;
- transformer le premier champ d'onde optique de référence (32) en au moins un premier champ d'onde d'image (38) par le biais d'au moins une couche holographique (20) ou couche optique diffractive (22) de la mémoire d'image optique (18) ; et
- faire sortir par couplage le premier champ d'onde d'image (38) de la couche holographique (20) ou de la couche optique diffractive (22) sur un côté de sortie par couplage (40) ;
un premier décalage angulaire (44) étant prévu entre une première surface de rayonnement incident (28), par laquelle au moins le premier champ d'onde optique de référence (32) est rayonné de manière incidente, et le côté de sortie par couplage (40) par lequel au moins le premier champ d'onde d'image (38) est délivré en sortie par couplage, le champ d'onde optique de référence (32) étant dirigé dans la mémoire d'image optique (18) par réflexion sur des surfaces limites intérieures (34 ; 36) et traversant au moins par portions proportionnellement une surface limite intérieure (36) de la mémoire d'image optique (18), qui est dirigée vers la couche holographique (20) ou la couche optique diffractive (22) et qui est au moins par portions proportionnellement transparente à la lumière,
au moins un premier champ d'onde optique de référence (32) et un deuxième champ d'onde optique de référence (46) étant générés et le premier champ d'onde optique de référence (32) étant rayonné dans la mémoire d'image optique (18) de manière incidente à la première surface de rayonnement incident (28) et le deuxième champ d'onde optique de référence (46) étant rayonné dans la mémoire d'image optique (18) de manière incidente à une deuxième surface de rayonnement incident (48) et les premier et deuxième champs d'onde optique de référence (46) étant transformés simultanément ou avec un retard en le premier champ d'onde d'image (38) ou en différents champs d'onde d'image (52) et le premier champ d'onde d'image (38) ou les différents champs d'onde d'image (52) étant délivré(s) en sortie par couplage sur le côté de sortie par couplage (40) qui sert de côté de sortie par couplage commun, et le premier décalage angulaire (44) étant prévu entre la première surface de rayonnement incident (28) et le côté de sortie par couplage (40) et au moins un deuxième champ d'onde optique de référence (46) étant généré qui est rayonné de manière incidente à au moins une deuxième surface de rayonnement incident (48), **caractérisé en ce que** la deuxième surface de rayonnement incident (48) et le côté de sortie par couplage (40), qui sert de côté de sortie par couplage commun, sont orientés parallèlement l'un à l'autre.

2. Procédé selon la revendication 1, **caractérisé en ce qu'**un trajet de faisceau du premier champ d'onde de référence (32) et/ou du deuxième champ d'onde de référence (46) est influencé par le biais d'un réflecteur (66) et/ou d'une optique de collimation (68) et/ou d'un guide de lumière (78).

3. Procédé selon l'une des revendications précédentes, **caractérisé en ce que** la mémoire d'image optique (18) comprend au moins une première couche de substrat (26) qui présente la première surface de rayonnement incident (28) et une deuxième surface de rayonnement incident (48).

4. Ensemble d'éclairage (70) destiné à un véhicule (84), ledit ensemble d'éclairage comprenant au moins :
- une première source de lumière (30) destinée à générer au moins un premier champ d'onde optique de référence (32) ;
- une mémoire d'image optique (18) comportant au moins une première surface de rayonnement incident (28), au moins une couche holographique (20) ou une couche optique diffractive (22) et un côté de sortie par couplage (40) ;
- des moyens techniques (64) destinés à diriger le premier champ d'onde optique de référence (32) en direction de la mémoire d'image optique (18) ;
- un premier décalage angulaire (44) étant prévu entre la première surface de rayonnement incident (28) et le côté de sortie par couplage (40),
la mémoire d'image optique (18) étant conçue pour diriger le champ d'onde optique de référence (32) par réflexion sur des surfaces limites intérieures (34 ; 36) et une surface limite intérieure (36) de la mémoire d'image optique (18), qui est dirigée vers la couche holographique (20) ou la couche optique diffractive (22), étant au moins par portions proportionnellement transparente à la lumière,
l'ensemble d'éclairage (70) comprenant au moins une deuxième source de lumière (74) destinée à générer au moins un deuxième champ d'onde optique de référence (46) ou la première source de lumière (30) étant conçue à cet effet et la mémoire d'image optique (18) comportant en outre une deuxième surface de rayonnement incident (48) et étant conçue pour transformer les premier et deuxième champs d'onde optique de référence (32 ; 46) en le premier champ d'onde d'image (38) ou en différents champs d'onde d'image (52), et le premier décalage angulaire (44) étant prévu entre la première surface de rayonnement incident (28) et le côté de sortie par couplage (40) et **caractérisé en ce que** la mémoire d'image optique (18) comporte une deuxième surface de rayonnement incident (48) qui est orientée parallèlement au côté de sortie par couplage (40) qui sert de côté de sortie par couplage commun.

5. Ensemble d'éclairage (70) selon la revendication 4, **caractérisé en ce qu'**il comprend un réflecteur (66) destiné à dévier le deuxième champ d'onde de référence (46) et/ou une optique de collimation (68) destinée à redresser le deuxième champ d'onde de référence (46).

6. Ensemble d'éclairage (70) selon l'une des revendications 4 à 5, **caractérisé en ce qu'**il comprend un guide de lumière (78) destiné à diriger le premier champ d'ondes de référence (32) en direction de la première surface de rayonnement incident (28).

7. Ensemble d'éclairage (70) selon l'une des revendications 4 à 6, **caractérisé en ce que** la mémoire optique d'image (18) comprend au moins une première couche de substrat (26) qui comporte la première surface de rayonnement incident (28) et une deuxième surface de rayonnement incident (48).

8. Ensemble d'éclairage (70) selon l'une des revendications 4 à 7, **caractérisé en ce que** la mémoire optique d'image (18) comprend au moins une première couche de substrat (26) qui comporte la première surface de rayonnement incident (28) et une deuxième surface de rayonnement incident (48), et comprend en outre une deuxième couche de substrat (56), la couche holographique (20) ou couche optique diffractive (22) étant disposée entre les première et deuxième couches de substrat (26 ; 56).

9. Véhicule automobile, comprenant au moins un ensemble d'éclairage (70) destiné à un véhicule (84) selon l'une des revendications 4 à 8.
